# EUROPEAN PATENT APPLICATION

(11) **EP 4 789 851 A1**
(43) Date of publication of application: **12.08.2026**
(21) Application number: 23954796.1
(22) Date of filing: 05.10.2023
(51) Int. Cl.: B29C 70/34

(54) **FRP MOLDING MOLD, AND FRP MOLDING SYSTEM AND METHOD USING SAME**

(71) Applicant: IHI Aerospace Co., Ltd., Tomioka-shi, Gunma 370-2398 (JP)
(72) Inventor: AKIMOTO, Toyoharu, Tomioka-shi, Gunma 370-2398 (JP); TANAKA, Shinichi, Tomioka-shi, Gunma 370-2398 (JP); SAITO TSUTSUI, Fuki, Tomioka-shi, Gunma 370-2398 (JP)
(74) Representative: Grünecker Patent- und Rechtsanwälte PartG mbB
(86) International application number: PCT/JP2023/036407
(87) International publication number: WO 2025/074585

(57) **Abstract**

An inner surface mold 10A or an outer surface mold 10B of an FRP molding mold 10 comprises a mold body 12, a partial drive mold 14, and a partial drive device 16. The partial drive mold 14 is attached to the mold body 12 and is configured to be movable in a pressing direction in which pressure is applied to the molding surface of the FRP material 2. The partial drive mold 14 is a solidified portion mold 14a or a thick portion mold 14b. The partial drive device 16 drives the partial drive mold 14 independently relative to the mold body 12 and applies pressure to the FRP material 2 and heats the FRP material 2 under pressure to convert the FRP material into FRP.

## Description

### Technical Field

The present invention relates to means for molding an FRP material containing a resin and reinforced fibers to manufacture an FRP product.

### Background Art

Fiber-reinforced composite materials, such as carbon fiber reinforced plastic (CFRP), have a lower density than metal materials such as iron and aluminum, yet have excellent mechanical properties and a high specific strength, and are light and strong.

Therefore, in recent years, fiber-reinforced composite materials have been used for aircraft, small ships, automobiles, and the like as structural members in place of aluminum alloys. Hereinafter, the fiber-reinforced composite materials are simply referred to as "FRP".

For example, in the related art, structural objects (fuselages, hatches, wings, and the like) of aircraft have been provided by joining aluminum alloys to each other by rivets. However, joining using rivets is inferior in terms of workability, and when joining using rivets is applied to FRP, the tensile strength is extremely reduced due to the cutting of internal fibers.

In order to solve this problem, for example, Patent Literatures 1 and 2 are proposed.

In the "method for manufacturing an FRP molded product" of Patent Literature 1, a sheet-shaped FRP material containing a thermoplastic resin and reinforced fibers is placed on a surface mat in an overlapping manner and heated using a heating device. Then, the FRP material is transported while being placed on the surface mat and is set in a mold of a press machine. Using the press machine, the overlapping FRP material and surface mat are pressurized to manufacture an FRP molded product in which the reinforced fibers and the surface mat are integrated with the thermoplastic resin.

In the "FRP molding system and method" of Patent Literature 2, an FRP material having an arc part and a member fixed to the arc part is molded as a single body to manufacture an arc-shaped FRP product. This system includes a partial pressing device, a member positioning mechanism, and a transport device. The partial pressing device has an upper mold and a lower mold that sandwich a part of the FRP material in a radial direction orthogonal to the arc part, and intermittently compresses a part of the FRP material to partially mold an FRP product. The member positioning mechanism determines a position of the member relative to the upper mold or the lower mold. The transport device intermittently moves a compressed part of the FRP material by the partial pressing device.

### Citation List

### Patent Literatures

Patent Literature 1: Japanese Patent Application Laid-Open No. 2015-009396
Patent Literature 2: International Publication No. 2022/044324

### Summary of Invention

### Technical Problem

In order to obtain an FRP product from the FRP material, it is necessary to impregnate the fibers (for example, carbon fibers) with the resin, and for this, it is effective to perform pressurization in a state in which the viscosity of the resin is low.

In Patent Literatures 1 and 2, when an FRP material containing a thermoplastic resin and reinforced fibers is heated under pressure using a press machine and a mold to reduce the viscosity of the resin, and then cooled under pressure to mold an FRP product, the following problems arise.
(1) In a state in which the viscosity of the thermoplastic resin is reduced, the specific volume of the FRP material increases due to thermal expansion, and the specific volume decreases when solidification proceeds. Therefore, when a portion in which the viscosity is reduced (for example, a molten portion) and a solidified portion in which the viscosity is not reduced are pressurized to be flush with each other, internal defects are generated in an intermediate portion (transition portion) therebetween since a sufficient pressure does not act on the solidified portion.
(2) When an FRP product has a portion with a varying plate thickness, the resin contained in the FRP material pressurized between the upper and lower molds has fluidity due to a reduction in viscosity, and fills the space between the upper and lower molds without a gap. Next, when the pressurized state is maintained until the thermoplastic resin is solidified, the contraction amount during solidification is small in a thin portion and is large in a thick portion. Therefore, since a sufficient pressure does not act on the thick portion, internal defects are generated in the thick portion.

The present invention is invented to solve the above-described problems. That is, an object of the present invention is to provide an FRP molding mold capable of molding an FRP product having few internal defects by heating an FRP material containing a resin under pressure, and an FRP molding system and method using the FRP molding mold.

### Solution to Problem

According to the present invention, there is provided an FRP molding mold that converts an FRP material containing a resin into FRP by heating the FRP material under pressure, including:
an inner surface mold and an outer surface mold configured to grip the FRP material between the inner surface mold and the outer surface mold,
in which the inner surface mold or the outer surface mold includes
   a mold body,
   a partial drive mold configured to be attached to the mold body and be movable in a pressing direction in which a pressure is applied to a molding surface of the FRP material,
   a partial drive device configured to be capable of driving the partial drive mold independently from the mold body, and
   a heating device configured to be capable of heating the mold body.

In addition, according to the present invention, there is provided an FRP molding system including: a partial pressing device configured to have a bolster and a slide fixing the FRP molding mold, and intermittently compress a part of the FRP material to partially mold the FRP product; and
a transport device configured to intermittently move a compressed part of the FRP material by the partial pressing device.

Furthermore, according to the present invention, there is provided an FRP molding method including: gripping the FRP material between the inner surface mold and the outer surface mold of the FRP molding mold;
pressurizing the FRP material by driving the mold body and the partial drive mold independently from each other; and
heating the FRP material under the pressure to convert the FRP material into FRP.

### Effect of the Invention

According to the configuration of the present invention, an FRP molding mold includes a partial drive device capable of driving a partial drive mold independently from a mold body, and a heating device capable of heating the mold body.

With this configuration, even when the specific volume (for example, thickness) of an FRP material increases due to thermal expansion in a heating portion (for example, molding zone) by the heating device, the molding outer surface of the partial drive mold can be driven independently from the mold body. Therefore, in the process of converting the FRP material into FRP, it is possible to apply a sufficient pressure to the entire molding surface of the FRP material, to prevent or suppress the generation of internal defects, and to mold an FRP product having few internal defects.

### Brief Description of Drawings

FIG. 1A is a representative perspective view of an FRP product manufactured according to the present invention.
FIG. 1B is a side cross-sectional view of the FRP product.
FIG. 1C is an end view of the FRP product.
FIG. 2 is a partially enlarged view of FIG. 1C.
FIG. 3 is a front view of an FRP molding system according to the present invention.
FIG. 4 is a view of a first embodiment of an inner surface mold, and is an enlarged cross-sectional view of the inner surface mold of FIG. 3.
FIG. 5 shows functional explanatory views of a solidified portion mold.
FIG. 6 shows functional explanatory views of a thick portion mold.
FIG. 7 shows explanatory views of a fixing structure of a partially fixed mold.
FIG. 8 shows explanatory views of a fixing structure of the thick portion mold.
FIG. 9 is a view of a second embodiment of the inner surface mold, and is an enlarged cross-sectional view of the inner surface mold of FIG. 3.
FIG. 10A is an explanatory view of a method for repeating partial molding.
FIG. 10B is another explanatory view of the method for repeating partial molding.
FIG. 11 is an overall flowchart of an FRP molding method according to the present invention.
FIG. 12 shows views illustrating another example of an arc part.
FIG. 13 shows explanatory views of variations of the pressing mechanism and the mold arrangement.

### Description of Embodiments

Hereinafter, embodiments of the present invention will be described in detail based on the accompanying drawings. Note that the same reference numeral will be given to the same portion in each drawing, and redundant description thereof will be omitted.

An FRP molding system 100 of the present invention is a device that molds an FRP material 2 to manufacture an arc-shaped FRP product 3 having a radius of 1 m or more.

The FRP material 2 is a material that is obtained by laminating a plurality of prepregs 1 and becomes an FRP product 3 after molding.

The term "prepreg 1" refers to an intermediate material obtained by impregnating a base material having reinforced fibers (for example, glass fibers or carbon fibers) with a resin.

In the present invention, the resin is preferably a thermoplastic resin, which is roughly classified into a crystalline resin and an amorphous resin.

The resin includes entangled long string-shaped polymers. The crystalline resin and the amorphous resin differ in aggregation state of polymer chains.

The crystalline resin has an "amorphous part" in which polymer chains are irregularly entangled and a "crystal part" in which polymer chains are regularly arranged. When the temperature is increased, a temperature at which the molecular motion of the amorphous part is activated is defined as a glass transition temperature (Tg), and a temperature at which the crystal part starts to flow is defined as a melting point (Tm).

The crystalline resin is, for example, polyether ether ketone (PEEK). The melting point of PEEK is about 340°C.

The amorphous resin has an "amorphous part" in which polymer chains are irregularly entangled. The amorphous resin does not have a definite melting point, and the molecular motion of polymer chains is activated when Tg is exceeded.

The amorphous resin is, for example, polyetherimide (PEI). The glass transition temperature of PEI is about 220°C.

The thermoplastic resin is solidified at room temperature. The resin is preferably a thermoplastic resin, but may be a thermosetting resin.

Hereinafter, the thermoplastic resin will be described, and the thermoplastic resin will be simply abbreviated as "resin" unless otherwise necessary.

In order to obtain the FRP product 3 from the FRP material 2, it is necessary to impregnate the fibers (for example, carbon fibers) with the resin by pressurization in a state in which the viscosity of the resin is low.

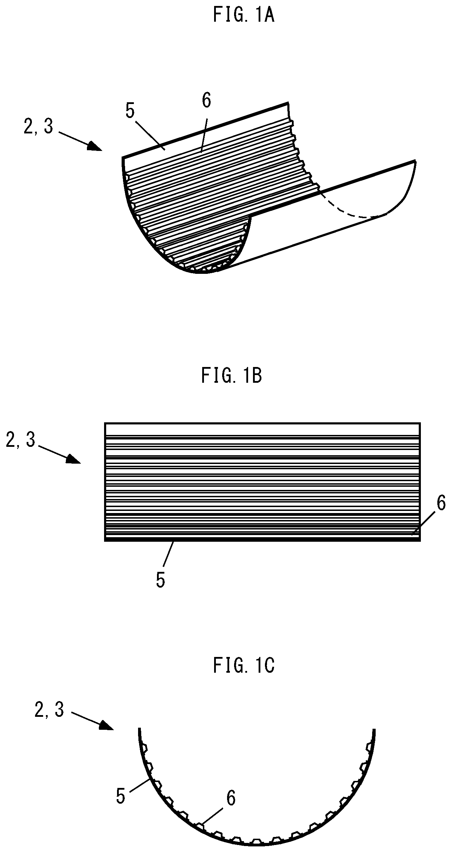

FIGS. 1A to 1C are explanatory views of the FRP material 2 and the FRP product 3.

To mold the FRP product 3, the FRP material 2 containing a thermoplastic resin can be heated under pressure to reduce the viscosity of the resin, and then cooled.

The FRP material 2 before molding and the FRP product 3 after molding have substantially the same shape.

Hereinafter, converting a part or the whole of the FRP material 2 into the FRP product 3 is referred to as "conversion into FRP".

FIG. 1A is a representative perspective view of the FRP material 2 and the FRP product 3, FIG. 1B is a side cross-sectional view, and FIG. 1C is an end view.

The phrase "arc-shaped FRP product 3 having a radius of 1 m or more" means a large FRP product such as a fuselage of an aircraft. The radius is, for example, 2 m, but may be 1 to 10 m. The axial length (the length in an axial direction) is, for example, 8 m, but may be 10 cm to 20 m.

The term "arc-shaped" refers to, for example, an arc with a constant radius as illustrated in FIG. 1A, but the radius may not be strictly constant, and may partially or continuously change. The circumferential angle (arc angle) of the arc is preferably 180 degrees or less, but may exceed 180 degrees as long as no interference occurs with a press frame 34 to be described later.

In addition, in this example, the FRP material 2 and the FRP product 3 have an arc-shaped arc part 5 and a member 6 fixed to the arc part 5.

As the member 6, a plurality of stringers 6 fixed to the arc part 5 and extending parallel to each other in the axial direction is provided in this example. The member 6 is fixed to any of the inner surface (a surface in an inner peripheral direction, and in a case of a fuselage of an aircraft, a recessed portion serving as an inner peripheral surface) and the outer surface (a surface in an outer peripheral direction, and in a case of a fuselage of an aircraft, a protruding portion serving as an outer peripheral surface) of the arc part 5. In the present embodiment, shapes of the arc-shaped arc part 5 and the member 6 fixed to the inner surface of the arc part 5 will be described.

In addition, the member 6 is not limited to the stringers 6, and may be another member such as a channel having an L-shaped or Z-shaped cross section.

The "axial direction" is not limited to a strict axial direction, and may be inclined relative to the axial direction.

In addition, the thickness of the arc part 5 in a radial direction is preferably constant, but may partially or continuously change. For example, a window frame and a door part of a fuselage of an aircraft may be included.

For example, the FRP material 2 may have an arc-shaped arc part 5 and a member 6 fixed to an outer surface of the arc part 5. In this case, a configuration may be adopted in which a molding outer surface of an inner surface mold has an inner-surface arc surface in close contact with the arc part 5, and a molding outer surface of an outer surface mold has an outer-surface arc surface in close contact with the outer surface of the FRP material 2 and an outer-surface recessed groove fitted to the outer surface shape of the member 6.

In addition, a configuration may be adopted in which the FRP material 2 has an arc-shaped arc part 5, a molding outer surface of an inner surface mold has an inner-surface arc surface F1 in close contact with the arc part 5, and a molding outer surface of an outer surface mold has an outer-surface arc surface F3 in close contact with the outer surface of the FRP material 2.

In addition, a configuration may be adopted in which the FRP material 2 has an arc-shaped arc part 5, a molding outer surface of an inner surface mold has an inner-surface arc surface F1 in close contact with the outer surface of the FRP material 2, and a molding outer surface of an outer surface mold has an outer-surface arc surface F3 in close contact with the arc part 5.

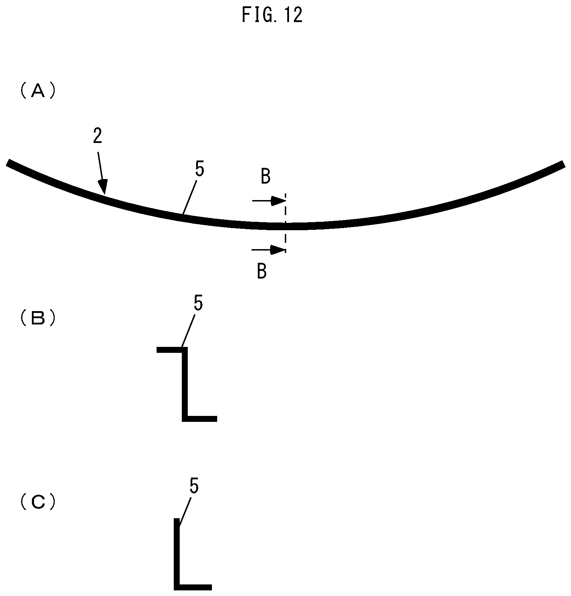

FIG. 12 shows views illustrating another example of the arc part 5. In this drawing, (A) shows a side view, and (B) and (C) show cross-sectional views taken along the line B-B in (A).

As illustrated in this drawing, the FRP material 2 may have an arc-shaped arc part 5, and the arc part 5 may have a Z-shaped, L-shaped, or planar cross-sectional shape.

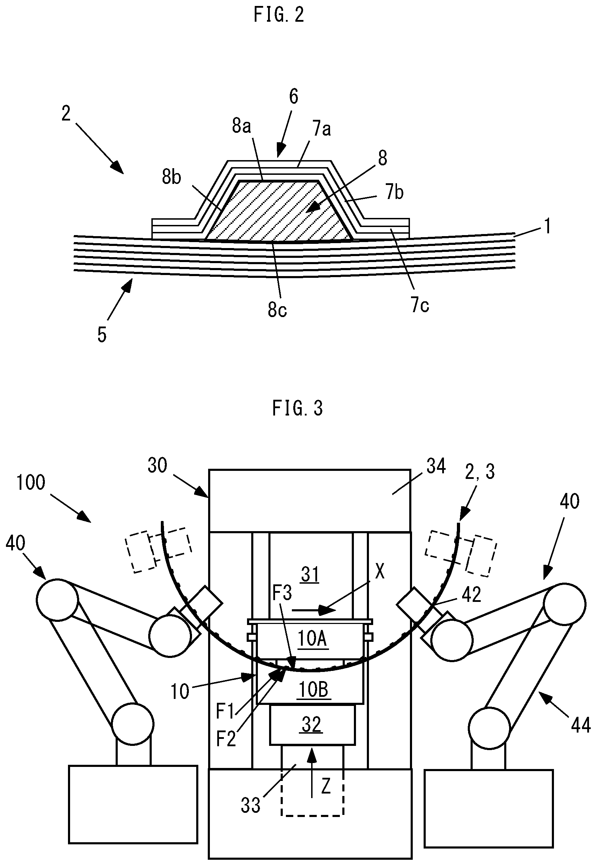

FIG. 2 is a partially enlarged view of FIG. 1C.

As illustrated in this drawing, the arc part 5 of the FRP material 2 is a laminate that matches a plate thickness distribution of the arc part 5 of the FRP product 3. The arc part 5 may be a part obtained by lamination according to an arc-shaped molded shape.

In addition, the stringer 6 of the FRP material 2 is a laminate, molded product, or preformed product bent to match the cross-sectional shape of the stringer 6 of the FRP product 3.

The thickness of the arc part 5 of the FRP material 2 corresponds to the thickness of the arc part 5 of the FRP product 3 in the radial direction, and is set according to the thickness after molding. In addition, the number of prepregs 1 laminated is preferably changed according to the thickness of the FRP product 3.

The same applies to the stringers 6 of the FRP material 2.

In FIG. 2, the stringer 6 is held on the inner surface of the arc part 5 at both ends of the stringer 6 in the circumferential direction with a detachable mandrel 8 sandwiched between the stringer 6 and the arc part 5.

The mandrel 8 preferably has a trapezoidal cross-sectional shape, and has an upper surface 8a, a slope surface 8b, and a bottom surface 8c. The bottom surface 8c may be an arc surface that matches the inner surface of the arc part 5.

In addition, the mandrel 8 may have an integrated structure or a divided structure. The phrase "integrated structure" means a structure adopting no divided structure.

In FIG. 2, the stringer 6 has an upper surface portion 7a in close contact with an upper surface 8a of the trapezoid of the mandrel 8, a pair of side surface portions 7b in close contact with the slope surface 8b of the trapezoid, and a pair of leg portions 7c that extend outward from lower ends of the side surface portions 7b and are in close contact with the inner surface of the arc part 5B.

The pair of leg portions 7c is held on the inner surface of the arc part 5B. The position of the holding is determined by covering the mandrel 8, or if necessary, for example, the leg portion 7c is temporarily attached to the arc part 5B by welding.

The cross-sectional shape of the stringer 6 is not limited to a trapezoid, and may be another shape, such as a triangular shape or a dome shape with an arc-shaped upper part.

Similarly, the mandrel 8 may have a cross-sectional shape other than a trapezoid in accordance with the cross-sectional shape of the stringer 6.

Both of the arc part 5 and the stringer 6 are made of the FRP material 2, and these can be molded integrally.

The role of the mandrel 8 is to prevent the shape from being destroyed when a molding pressure is applied. Therefore, the mandrel 8 is preferably used for the member 6 having a hollow structure.

In addition, for example, even when the stringer 6 has an L-shaped or Z-shaped cross section where the other end is open, the mandrel 8 is preferably used.

FIG. 3 is a front view of the FRP molding system 100 according to the present invention, and illustrates the molding in progress.

In FIG. 3, the FRP molding system 100 includes an FRP molding mold 10, a partial pressing device 30, and a transport device 40.

The FRP molding mold 10 has an inner surface mold 10A (upper mold in this drawing) and an outer surface mold 10B (lower mold in this drawing) gripping the FRP material 2 and the FRP product 3 therebetween.

In this example, the inner surface mold 10A and the outer surface mold 10B sandwich a part (pressed part) of the FRP material 2 therebetween in a vertical direction.

The inner surface mold 10A has an inner-surface arc surface F1 in close contact with the arc part 5, and an inner-surface recessed groove F2 fitted to the upper surface shape of the member 6.

The outer surface mold 10B has an outer-surface arc surface F3 in close contact with the outer surface of the FRP material 2.

The partial pressing device 30 intermittently compresses a part (pressed part) of the FRP material 2 in a radial direction (vertical direction in the drawing) orthogonal to the arc part 5 of the FRP material 2 to partially mold the FRP product 3.

The phrase "intermittently compresses" means that compressing and transporting the FRP material 2 are repeatedly performed by the partial pressing device 30 and the transport device 40.

The partial pressing device 30 compresses a part of the FRP material 2 by the inner surface mold 10A and the outer surface mold 10B.

In this example, the partial pressing device 30 has a bolster 31 that fixes the inner surface mold 10A to the lower surface, a slide 32 that fixes the outer surface mold 10B to the upper surface, a hydraulic ram 33 that reciprocates the slide 32 vertically, and a press frame 34 to which the bolster 31 and the hydraulic ram 33 are fixed.

In this example, the partial pressing device 30 pushes the outer surface mold 10B (lower mold in the drawing) up against the inner surface mold 10A (upper mold in the drawing) to compress the pressed part of the FRP material 2. In this case, the partial pressing device 30 compresses the pressed part in the diameter direction of the FRP material 2.

The press frame 34 has an upper structure set so as not to interfere with the FRP material 2 when intermittently moving over the compressed part of the FRP material 2.

As long as the FRP material 2 and the press upper structure do not interfere with each other, the vertical relationship between the bolster 31, the slide 32, and the hydraulic ram 33 may be reversed. That is, the slide 32 and the hydraulic ram 33 may be in the upper part, and the bolster 31 may be in the lower part.

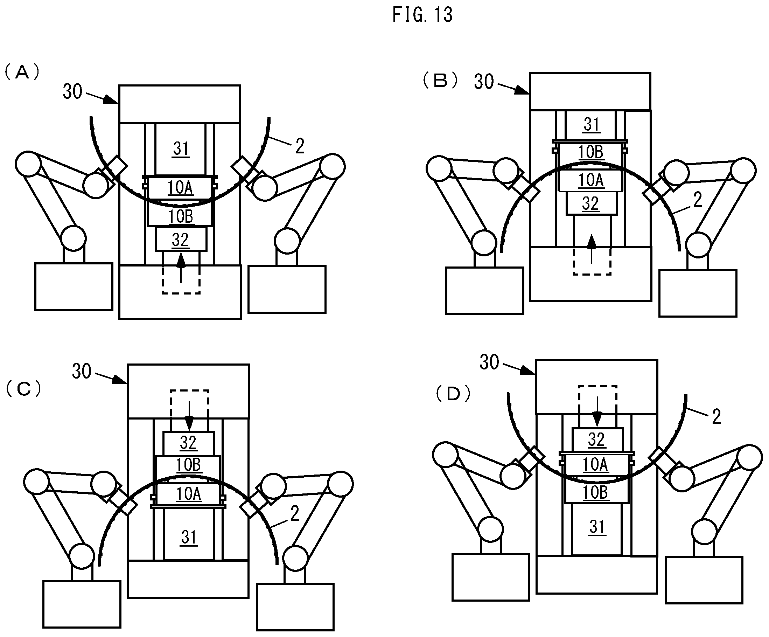

FIG. 13 shows explanatory views of variations of the pressing mechanism and the mold arrangement.

FIG. 13(A) shows a first variation illustrated in FIG. 3.

In this example, the inner surface mold 10A is positioned above the FRP material 2, and the outer surface mold 10B is positioned below the FRP material 2. The partial pressing device 30 pushes the outer surface mold 10B up against the inner surface mold 10A to compress the pressed part of the FRP material 2.

FIG. 13(B) shows a second variation in which the pressing mechanism is disposed in the same manner as in FIG. 3, but the mold arrangement is reversed from that in FIG. 3.

In this example, the inner surface mold 10A is positioned below the FRP material 2, and the outer surface mold 10B is positioned above the FRP material 2. The partial pressing device 30 pushes the inner surface mold 10A up against the outer surface mold 10B to compress the pressed part of the FRP material 2.

FIG. 13(C) shows a third variation in which the pressing mechanism arrangement and the mold arrangement are reversed from those in FIG. 3.

In this example, the inner surface mold 10A is positioned below the FRP material 2, and the outer surface mold 10B is positioned above the FRP material 2. The partial pressing device 30 pushes the outer surface mold 10B down against the inner surface mold 10A to compress the pressed part of the FRP material 2.

FIG. 13(D) shows a fourth variation in which the pressing mechanism arrangement is reversed from that in FIG. 3 and the mold arrangement is the same as that in FIG. 3.

In this example, the inner surface mold 10A is positioned above the FRP material 2, and the outer surface mold 10B is positioned below the FRP material 2. The partial pressing device 30 pushes the inner surface mold 10A down against the outer surface mold 10B to compress the pressed part of the FRP material 2.

The transport device 40 intermittently moves the compressed part (pressed part) of the FRP material 2 by the partial pressing device 30.

The transport device 40 has a gripping device 42 and a moving device 44.

The gripping device 42 grips a part of the FRP material 2 or the FRP product 3. The moving device 44 moves the gripping device 42 in a moving direction X of the FRP material 2.

In this example, the moving direction X of the FRP material 2 is a circumferential direction along the arc of the FRP product 3. The moving device 44 is, for example, a multi-joint robot, and the gripping device 42 is a robot hand.

Hereinafter, a horizontal direction orthogonal to the moving direction X is referred to as a width direction Y, and a vertical direction orthogonal to the width direction Y is referred to as a pressurizing direction.

In this example, a pair of the transport devices 40 is provided on the upstream side and the downstream side of the partial pressing device 30, but may be on only one of the upstream side and the downstream side.

In addition, the gripping device 42 grips the FRP material 2 or the FRP product 3. In this case, for example, the gripped part may be moved during compression by the partial pressing device 30.

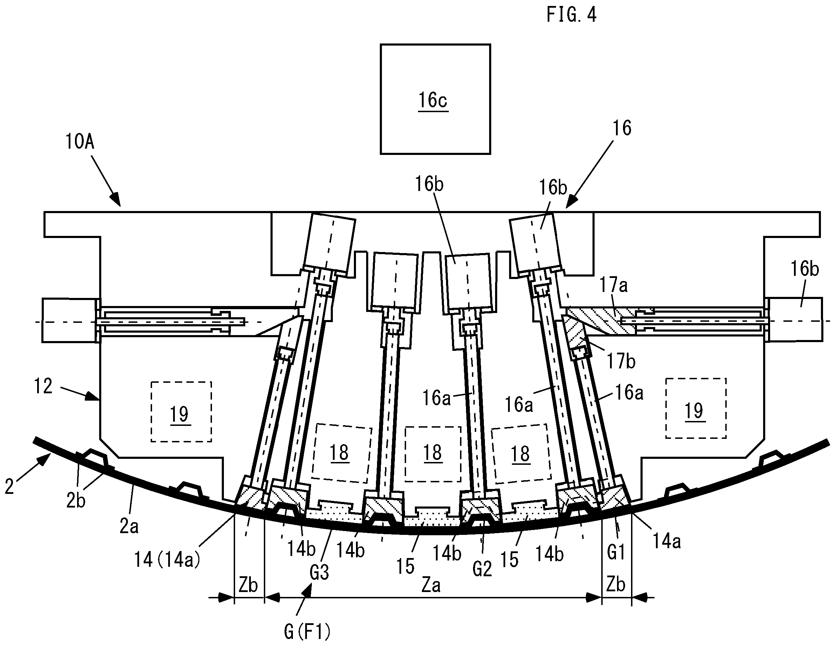

FIG. 4 is a view of a first embodiment of the inner surface mold 10A (upper mold in this drawing), and is an enlarged cross-sectional view of the inner surface mold 10A of FIG. 3.

In this drawing, the inner surface mold 10A includes a mold body 12, a partial drive mold 14, a partial drive device 16, and a heating device 18.

In FIG. 4, the FRP material 2 has a thin portion 2a having a relatively small thickness, and a thick portion 2b having a larger thickness than the thin portion 2a.

The thin portion 2a corresponds only to the arc part 5 in FIG. 2, and the thick portion 2b corresponds to an overlapping portion between the arc part 5 and the pair of leg portions 7c in FIG. 2.

The mold body 12 of the inner surface mold 10A is directly fixed to the lower surface of the bolster 31 of the pressing device (partial pressing device 30 in this example).

The outer surface mold 10B is directly fixed to the upper surface of the slide 32 of the partial pressing device 30.

The partial drive mold 14 is attached to the mold body 12 to be movable in a pressing direction in which a pressure is applied to the molding surface of the FRP material 2.

The partial drive mold 14 is a partial mold extending substantially over the entire mold body 12 in the width direction (Y direction).

In this example, the partial drive mold 14 has a solidified portion mold 14a and a thick portion mold 14b.

The inner surface mold 10A and the outer surface mold 10B have a molding outer surface abutting on the molding surface of the FRP material 2.

The molding outer surface of the inner surface mold 10A and the outer surface mold 10B has a molding zone Za and a non-molding zone Zb.

The molding zone Za is a range that converts the FRP material 2 of the abutting part into FRP.

The non-molding zone Zb is a range that is positioned adjacent to and outside the molding zone Za, and preheats or cools the FRP material 2 or the FRP product 3.

The non-molding zone Zb is divided into a preheating zone that preheats the FRP material 2 or the FRP product 3 and a cooling zone that cools the FRP material 2 or the FRP product 3.

In this example, a molding outer surface G of the inner surface mold 10A has molding outer surfaces G1, G2, and G3 of a solidified portion mold 14a, a thick portion mold 14b, and a partially fixed mold 15. The molding outer surfaces G1 and G3 of the solidified portion mold 14a and the partially fixed mold 15 constitute the inner-surface arc surface F1 in close contact with the arc part 5 described above. The molding outer surface G2 of the thick portion mold 14b constitutes the inner-surface recessed groove F2 fitted to the upper surface shape of the member 6 described above.

The present invention is not limited to this configuration, and a part of the mold body 12 may constitute the molding outer surface G of the inner surface mold 10A.

The solidified portion mold 14a is positioned in the non-molding zone Zb.

The solidified portion mold 14a has a molding outer surface G1 (lower surface in this drawing) in close contact with the inner surface of the thin portion 2a (arc part 5 in FIG. 2), and is positioned to be movable in the pressing direction in the recessed groove provided in the mold body 12.

The thick portion mold 14b molds the thick portion 2b. The thick portion 2b is a portion to which another component is joined, such as a portion where the arc part 5 and the leg portion 7c in FIG. 2 overlap each other. The thick portion 2b is not limited to this example, and may be any portion having a relatively large thickness.

The thick portion mold 14b has an outer surface (lower surface in this drawing) in close contact with the outer surface of the stringer 6 in FIG. 2, and is positioned to be movable in the pressing direction in the recessed groove provided in the mold body 12.

The partial drive device 16 is a drive device capable of driving the partial drive mold 14 independently from the mold body 12.

A plurality of (preferably three or more) the partial drive devices 16 may be provided at intervals in the width direction (Y direction) of the mold body 12 with respect to the partial drive mold 14.

The partial drive device 16 has a rod-shaped member 16a, a linear motion device 16b, and a first pressing control device 16c.

The rod-shaped member 16a is a shaft that has one end (lower end in the drawing) fixed to the partial drive mold 14 and extends in the opposite direction to the pressing direction.

The linear motion device 16b is a device fixed to the mold body 12 and moves the other end of the rod-shaped member 16a in the pressing direction. The linear motion device 16b is a hydraulic cylinder in this example, but may be a pneumatic cylinder.

The first pressing control device 16c is a device that controls the linear motion device 16b to adjust the pressure acting on the molding surface of the FRP material 2. The first pressing control device 16c is, for example, a hydraulic unit or a pneumatic unit. The first pressing control device 16c is installed outside the mold body 12 and is connected to each linear motion device 16b via piping (not illustrated).

In this example, a pair of direction-changing members 17a and 17b is provided between the solidified portion mold 14a and the linear motion device 16b. The direction-changing members 17a and 17b have tapered surfaces that slide on each other, and are cams that change the moving direction of the direction-changing member 17a by the linear motion device 16b to the moving direction of the direction-changing member 17b by the sliding of the tapered surfaces.

With this configuration, the overall height of the mold body 12 can be set low.

In this example, the thick portion mold 14b is directly connected to the linear motion device 16b via the rod-shaped member 16a.

In this example, the heating device 18 is disposed inside the mold body 12 and heats the mold body 12. The heating device 18 is configured to be capable of heating to a molding temperature at which the viscosity of the thermoplastic resin is reduced.

The heating device 18 is, for example, a cartridge heater, and is disposed inside the mold body 12 so as not to interfere with the partial drive device 16. The heating device 18 may be another heater, such as an induction heater or a sheathed heater.

The power supply and the control device for the heating device 18 are installed outside the mold body 12 and are connected to the heating device 18 via wiring (not illustrated).

In a case of the crystalline resin, the molding temperature is set to be higher than the melting point but within a range in which the resin does not thermally decompose. For example, the molding temperature may be +10°C to +110°C relative to the melting point. For example, in a case of PEEK, the melting point is about 340°C, and the molding temperature may be about 350°C to 450°C.

In a case of the amorphous resin, the molding temperature is set to be higher than the glass transition temperature but within a range in which the resin does not thermally decompose. For example, in a case of PEI, the glass transition temperature is about 220°C, and the molding temperature may be about 300°C to 400°C.

The above-described molding temperatures are merely examples, and the molding temperature is changed depending on the kind and viscosity of the resin, required mechanical characteristics, molding time, and molding pressure.

In FIG. 4, the inner surface mold 10A further includes a partially fixed mold 15 and a cooling device 19.

The partially fixed mold 15 is directly attached detachably to the mold body 12 of the molding zone Za.

The partially fixed mold 15 has a molding outer surface G3 abutting on the molding surface of the FRP material 2.

The molding outer surface G3 of the partially fixed mold 15 has any shape corresponding to the shape of the molding surface of the FRP material 2.

The partially fixed mold 15 has an advantage that, when the plate thickness distribution varies depending on the molding range, the partially fixed mold 15 can be replaced to perform molding without replacing the mold body.

The cooling device 19 has a function of cooling the mold body 12.

The cooling device 19 is, for example, a water-cooling or air-cooling heat exchanger, and is disposed inside the mold body 12 so as not to interfere with the partial drive device 16 and the heating device 18.

The refrigerant supply source and the control device for the cooling device 19 are installed outside the mold body 12 and are connected to the cooling device 19 via piping (not illustrated).

The configuration of the outer surface mold 10B may be the same as or different from that of the inner surface mold 10A.

### (Function of solidified portion mold 14a)

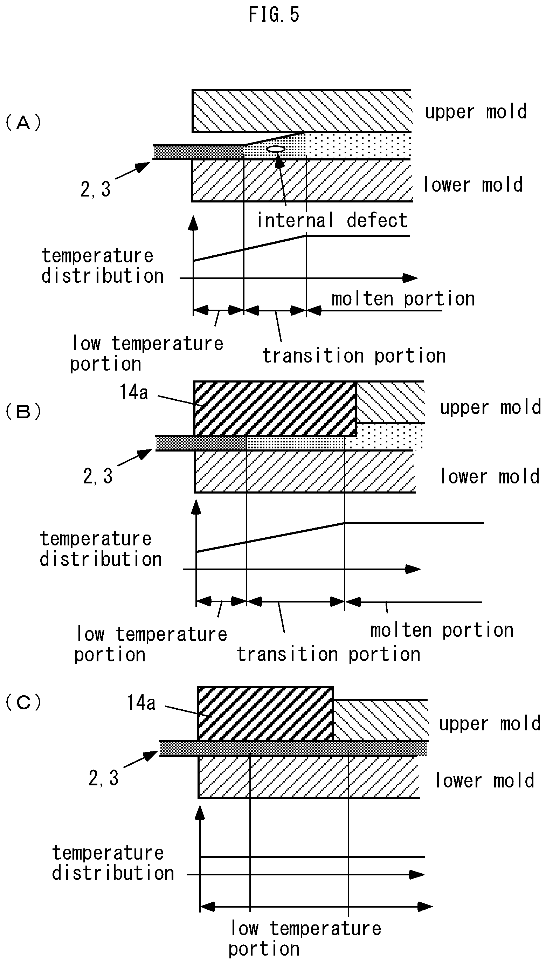

FIG. 5 shows functional explanatory views of the solidified portion mold 14a.

In this example, the FRP material 2 and the FRP product 3 have a constant thickness.

FIG. 5(A) shows a state in which an FRP material 2 having a constant thickness is gripped between an upper mold and a lower mold, and the upper mold and the lower mold are heated to heat the FRP material 2 therebetween, thereby reaching a molten state, which is an example of the related art in which the solidified portion mold 14a is not used.

In this case, a low temperature portion (corresponding to the non-molding zone Zb) in which the temperature is relatively low and the expansion is small is generated at end portions of the upper mold and the lower mold, and a transition portion is generated between the low temperature portion and a molten portion (corresponding to the molding zone Za) that is melted and expanded. The expansion amount is, for example, about 3% in terms of volume.

The transition portion has an intermediate temperature between the low temperature portion and the molten portion, and is in a state in which the viscosity starts to decrease.

In this transition portion, the upper and lower molds cannot follow the change in volume of the FRP material 2 or the FRP product 3, and a gap is thus formed between the upper and lower molds and the FRP material 2 or the FRP product 3.

In this state, in the transition portion, when the low temperature portion is the FRP material 2 or the FRP product 3, the residual stress from the previous molding is released by heat input, causing the layer to meander out of the plane. Otherwise, the micro-voids present in the resin or between the resin and the fibers expand.

As a result, voids are formed in the resin, between the resin and the fibers, or in both. In the transition portion, since the resin is not completely melted and the load is not transmitted from the mold, the voids are not filled and become internal defects.

FIG. 5(B) is a schematic view during molding using the solidified portion mold 14a of the present invention, and illustrates a state in which the solidified portion mold 14a is driven independently from the upper mold and pressed down.

With this configuration, in the transition portion, when the low temperature portion is the FRP product 3, the residual stress from the previous molding is not released, and thus it is possible to prevent the layer from meandering out of the plane. In addition, even when the low temperature portion is the FRP material 2 and the FRP product 3, the micro-voids present in the resin or between the resin and the fibers can be prevented from expanding due to the pressurization by the solidified portion mold 14a.

In this state, as illustrated in FIG. 5(B), a step corresponding to the thermal expansion difference is generated between the solidified portion mold 14a and the upper mold.

FIG. 5(C) shows a schematic view after molding using the solidified portion mold 14a of the present invention, and illustrates a state in which the mold is cooled from the state in FIG. 5(B), and the FRP material 2 and the FRP product 3 are solidified.

Between FIG. 5(B) and FIG. 5(C), the pressurization by the solidified portion mold 14a and the upper and lower molds is continued.

As the temperatures of the molten portion and the transition portion decrease, the amount of thermal expansion decreases, and the entire portion becomes a low temperature portion, so that the step between the solidified portion mold 14a and the upper mold is eliminated.

When the resin is a crystalline resin, the temperatures of the FRP material 2 and the FRP product 3 at the end portion on the high temperature side of the solidified portion mold 14a are maintained at a temperature of, for example, +0°C to +110°C, and preferably +10°C to +20°C relative to the melting point of the thermoplastic resin, and the temperatures of the FRP material 2 and the FRP product 3 at the end portion on the low temperature side are maintained at a temperature of -0°C to -300°C, and preferably -20°C to -30°C relative to the melting point of the thermoplastic resin.

When the resin is an amorphous resin, for example, the temperature gradient of the molding outer surface of the solidified portion mold 14a may be set to be lower than the glass transition temperature on the low temperature side and be higher than the glass transition temperature on the high temperature side. The above temperature gradient may also be set to be higher than the glass transition temperature on the low temperature side, when the resin is an amorphous resin.

The temperature gradient may be controlled by controlling the temperatures of the low temperature side and the high temperature side around the solidified portion mold 14a using the heating device 18.

In addition, for the temperature measurement, a thermocouple is preferably inserted into the solidified portion mold 14a.

In this case, as illustrated in FIG. 5(B), the high temperature side of the solidified portion mold 14a is positioned near the boundary between the molten portion and the transition portion, and the resin on the high temperature side can be deformable by the pressure of the solidified portion mold 14a. The interval between the low temperature side and the high temperature side of the solidified portion mold 14a may be 50 mm or more, for example. The interval between the low temperature side and the high temperature side depends on the temperature gradient imparted by the mold, that is, on the mold structure.

When the resin is an amorphous resin, the resin does not have a definite melting point, and its elastic modulus gently changes with a change in temperature. Accordingly, the resin may be in the transition portion on the high temperature side of the solidified portion mold 14a, and the resin on the high temperature side may be deformed by the pressure of the solidified portion mold 14a.

### (Ancillary function of solidified portion mold 14a)

In the example of the related art in FIG. 5(A), since there is a gradient in internal pressure between the center and end portions of the upper mold and the lower mold, and the molten portion has fluidity, a phenomenon in which the FRP material 2 during molding is elongated from the center portion toward the end portion occurs. The amount of elongation reaches, for example, about 1% or more of the molding range.

In the present invention of FIGS. 5(B) and 5(C), the elongation phenomenon can be suppressed by using the solidified portion mold 14a.

In addition, for this ancillary function, the solidified portion mold 14a may be divided into a mold for preventing elongation and a mold for preventing internal defects.

In addition, in this case, the solidified portion mold for preventing elongation may be provided away from the heating region (the molding zone Za and the non-molding zone Zb) of the mold.

### (Form in which internal defects are generated)

In FIG. 5(B), when the range of the solidified portion mold 14a is too wide, the high temperature side of the solidified portion mold 14a is positioned in the molten portion, and the solidified portion mold 14a is pushed up by thermal expansion of the molten portion, internal defects may be generated in the transition portion.

In addition, when the range of the solidified portion mold 14a is wide and the temperature of the solidified portion mold 14a is too low, there is no portion separated from the mold, but the range in which molding can be performed is narrowed in the mold.

In addition, conversely, when the range of the solidified portion mold 14a is too narrow, the high temperature side of the solidified portion mold 14a is positioned in the low temperature portion, and the transition portion is positioned between the upper mold and the lower mold, the same state as that in FIG. 5(A) is obtained, and internal defects may be generated in the transition portion.

### (Function of thick portion mold 14b)

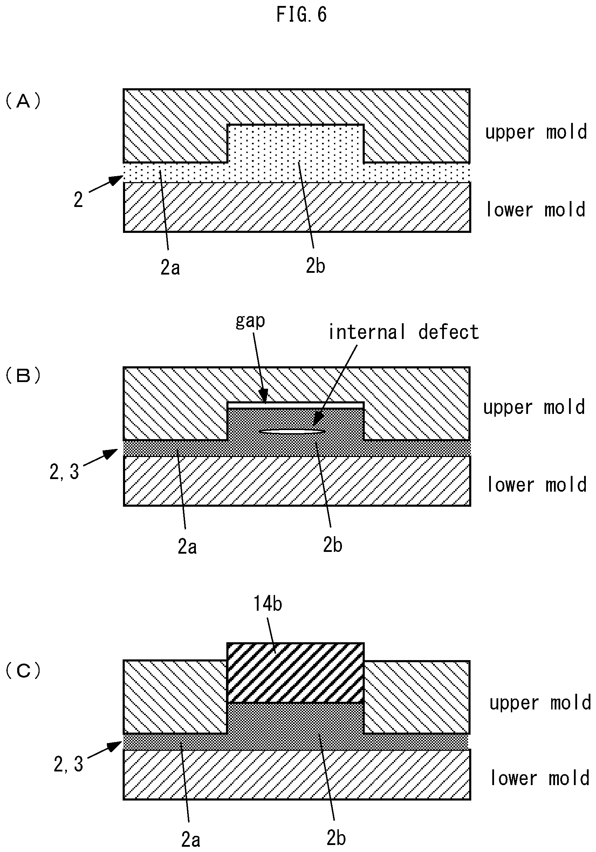

FIG. 6 shows functional explanatory views of the thick portion mold 14b.

In this example, a case is illustrated in which the FRP material 2 and the FRP product 3 have a thin portion 2a having a relatively small thickness, and a thick portion 2b having a larger thickness than the thin portion 2a.

FIGS. 6(A) and 6(B) show a case in which an FRP material 2 having a thin portion 2a and a thick portion 2b is pressurized between the upper mold and the lower mold, which is an example of the related art in which the thick portion mold 14b is not used.

FIG. 6(A) illustrates a state in which the FRP material 2 in a molten state is pressurized, and in this state, the resin has fluidity due to a reduction in viscosity and fills the space between the upper and lower molds without a gap.

FIG. 6(B) illustrates a state in which the resin is cooled and solidified from the state in FIG. 6(A). When the resin is cooled and solidified, the contraction amount during solidification is small in the thin portion 2a and is large in the thick portion 2b. Therefore, since a sufficient pressure does not act on the thick portion 2b, internal defects may be generated in the thick portion 2b.

FIG. 6(C) shows a schematic view after molding using the thick portion mold 14b of the present invention, and illustrates a state in which the mold is cooled from the state in which the resin fills the space between the upper and lower molds without a gap, and the FRP material 2 and the FRP product 3 are solidified.

In this case, the pressurization by the thick portion mold 14b and the upper and lower molds is continued during cooling.

When the resin is cooled and solidified, the contraction amount during solidification is small in the thin portion 2a and is large in the thick portion 2b. However, since the thick portion mold 14b is independently driven, a sufficient pressure acts on the thick portion 2b, and thus it is possible to suppress or prevent the generation of internal defects in the thick portion 2b.

### (Fixing structure of partially fixed mold 15)

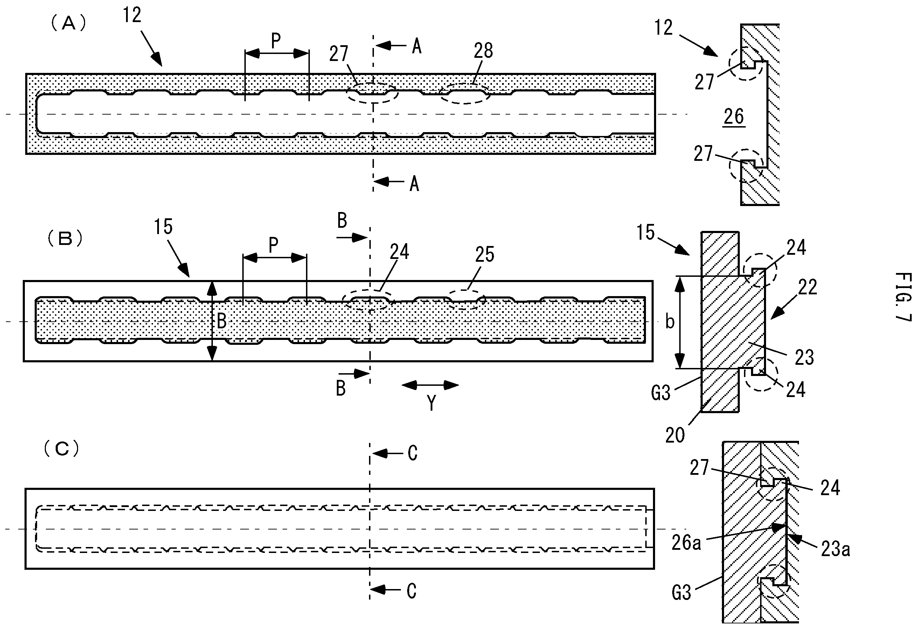

FIG. 7 shows explanatory views of a fixing structure of the partially fixed mold 15.

In FIG. 7(A), the left view is an external view of the mold body 12, and the right view is a cross-sectional view taken along the line A-A in the left view. In addition, in FIG. 7(B), the left view is a rear view of the partially fixed mold 15, and the right view is a cross-sectional view taken along the line B-B in the left view. Furthermore, in FIG. 7(C), the left view is an external view of a state in which the partially fixed mold 15 is fixed to the mold body 12, and the right view is a cross-sectional view taken along the line C-C in the left view.

In FIG. 7(B), the partially fixed mold 15 has a long member 20 having a constant width B and extending in the length direction, and a mounting portion 22 that is detachably attached by being fitted to the mold body 12.

The molding outer surface G3 of the partially fixed mold 15 is planar in the drawing, but has any shape corresponding to the shape of the molding surface of the FRP material 2.

The long member 20 has the molding outer surface G3 of the partially fixed mold 15.

The mounting portion 22 has a single leg portion 23 extending from the long member 20 to a side opposite to the molding outer surface G3, and a plurality of first claw portions 24 protruding from an end portion on the mold body side of the leg portion 23 to both sides of the long member 20 in the width direction.

The leg portion 23 is configured integrally with the long member 20, and a width b of the leg portion 23 is set to be smaller than a width B of the long member 20.

The plurality of first claw portions 24 are formed at a constant pitch P in the length direction of the partially fixed mold 15. In addition, a narrow part 25 where no first claw portion 24 is present is provided in the middle of the pitch P.

In FIG. 7(A), the mold body 12 has a single recessed groove 26 fitted to the mounting portion 22.

As illustrated in the right view in FIG. 7(A), the recessed groove 26 has a shape allowing accommodation of the leg portion 23 and the first claw portion 24 of the partially fixed mold 15.

In addition, the mold body 12 has a plurality of second claw portions 27 fitted to gaps between the long member 20 and the first claw portions 24 of the partially fixed mold 15.

The plurality of second claw portions 27 is formed at the same pitch P as the first claw portions 24 in the width direction (Y direction) of the mold body 12. In addition, a wide part 28 where no second claw portion 27 is present is provided in the middle of the pitch P.

Furthermore, the length of the wide part 28 of the mold body 12 is set to be longer than that of the first claw portion 24 of the partially fixed mold 15.

With the above-described fixing structure, the first claw portion 24 of the partially fixed mold 15 is inserted through the wide part 28 of the mold body 12, and the rear surface of the partially fixed mold 15 is brought into close contact with the outer surface of the mold body 12. Next, the partially fixed mold 15 is moved by half of the pitch P in the length direction, so that the partially fixed mold 15 can be fitted to the mold body 12 as illustrated in FIG. 7(C).

In FIG. 7(C), the end portion is preferably fixed with a retaining plate (not illustrated) to prevent slip-off.

In the fitting state illustrated in the right view in FIG. 7(C), the dimensions of the respective portions are set so that the first claw portion 24 and the second claw portion 27 are fitted to each other, and in this state, a rear surface 23a of the leg portion 23 is in close contact with a bottom surface 26a of the recessed groove 26.

With this configuration, the force and heat between the partially fixed mold 15 and the mold body 12 can be smoothly transmitted via the rear surface 23a and the bottom surface 26a.

### (Fixing structure of partial drive mold)

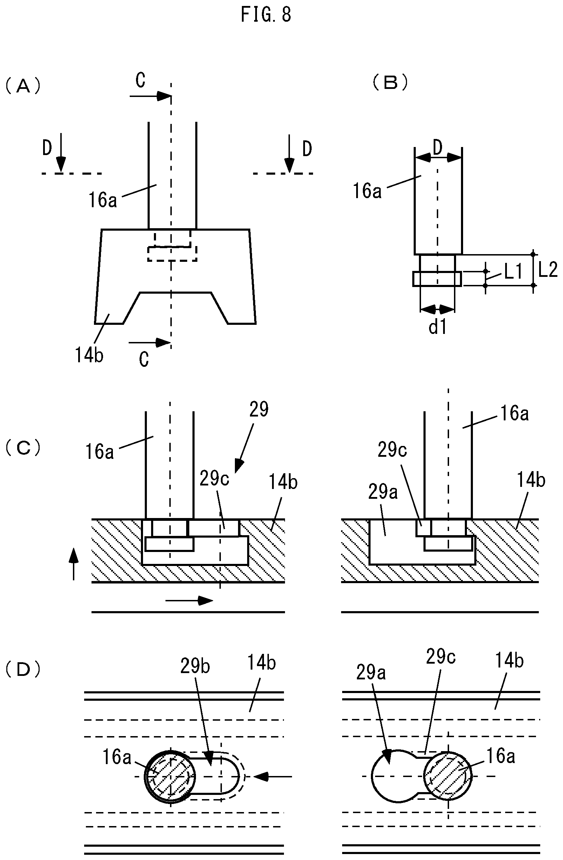

FIG. 8 shows explanatory views of a fixing structure of the thick portion mold 14b.

FIG. 8(A) is an enlarged view of the thick portion mold 14b of FIG. 4, and FIG. 8(B) is an external view of one end (lower end in the drawing) of the rod-shaped member 16a.

In addition, FIG. 8(C) is a cross-sectional view taken along the line C-C in FIG. 8(A), and FIG. 8(D) is a view in the direction of the arrow D-D in FIG. 8(A).

In FIG. 8, the partial drive mold 14 is configured detachably by being fitted to a lower end portion of the rod-shaped member 16a.

In FIG. 8(B), the rod-shaped member 16a has a small-diameter part having a diameter smaller than an outer diameter D of the lower end portion between a first distance L1 and a second distance L2 from one end (lower end in the drawing).

In FIGS. 8(C) and 8(D), the thick portion mold 14b has, on its rear surface, a stepped hole 29 to which the lower end portion of the rod-shaped member 16a is detachably attached.

The stepped hole 29 has a first recessed portion 29a into which the lower end portion of the rod-shaped member 16a can be inserted, and a second recessed portion 29b having a support claw 29c fitted to the small-diameter part having a diameter d1.

The first recessed portion 29a and the second recessed portion 29b are configured so that the partial drive mold 14 is movable in the length direction of the partial drive mold 14 with respect to the lower end portion of the rod-shaped member 16a.

Using the above-described rod-shaped member 16a and thick portion mold 14b, as illustrated in the left views in FIGS. 8(C) and 8(D), the rod-shaped member 16a is moved in the width direction (Y direction) of the mold body 12 in a state in which the lower end portion of the rod-shaped member 16a is inserted into the first recessed portion 29a. Therefore, as illustrated in the right views in FIGS. 8(C) and 8(D), the thick portion mold 14b can be fixed to the lower end portion of the rod-shaped member 16a.

In addition, the thick portion mold 14b can be removed from the lower end portion of the rod-shaped member 16a by moving the rod-shaped member 16a in the opposite direction.

The fixing structure of the solidified portion mold 14a is the same as the fixing structure of the thick portion mold 14b.

The same fixing structure may also be applied to the fixing structure of the partially fixed mold 15.

### (Second embodiment of inner surface mold 10A)

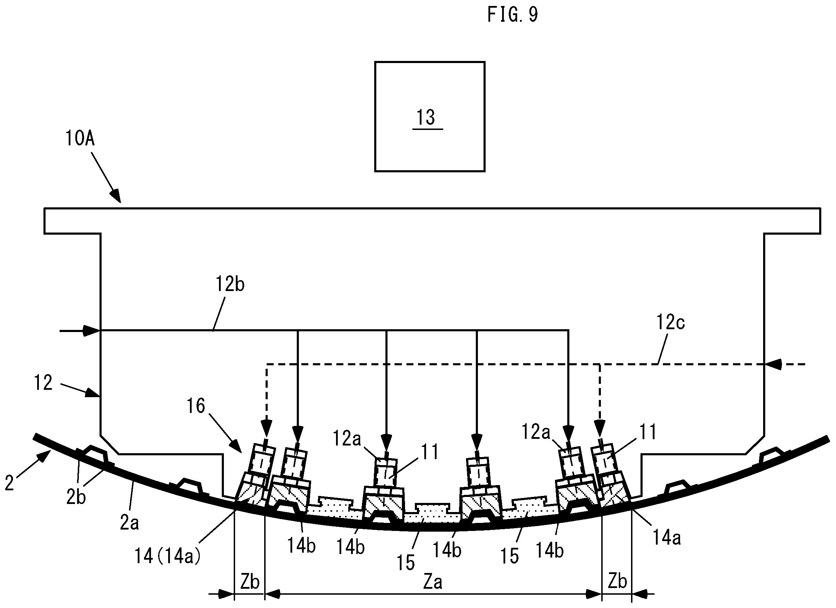

FIG. 9 is a view of a second embodiment of the inner surface mold 10A (upper mold in this drawing), and is an enlarged cross-sectional view of the inner surface mold 10A of FIG. 3. Hereinafter, differences from the first embodiment will be described.

In this example, the partial drive device 16 includes a piston 11 and a second pressing control device 13.

A plurality of (preferably three or more) the partial drive devices 16 may be provided at intervals in the width direction (Y direction) of the mold body 12 with respect to the partial drive mold 14.

The piston 11 is fixed to the partial drive mold 14, is fitted to a cylindrical cavity 12a provided in the mold body 12, and is movable in the axial direction of the cylindrical cavity 12a.

In this example, the piston 11 is integrated with the lower end portion of the rod-shaped member 16a illustrated in FIG. 8, and a seal member is attached to the outer peripheral portion of the piston 11.

The mold body 12 has the cylindrical cavity 12a and flow channels 12b and 12c communicating with the outside.

The second pressing control device 13 supplies pressure oil to the cylindrical cavity 12a via the flow channels 12b and 12c provided in the mold body 12 to move the piston 11 in the pressing direction, thereby adjusting the pressure acting on the molding surface.

The second pressing control device 13 is, for example, a hydraulic unit or a pneumatic unit. The second pressing control device 13 is installed outside the mold body 12 and is connected to the mold body 12 via piping (not illustrated).

The second pressing control device 13 may be substantially the same as the first pressing control device 16c.

Other configurations are the same as those of the first embodiment.

According to the second embodiment of the inner surface mold 10A described above, pressure oil is supplied from the second pressing control device 13 to each cylindrical cavity 12a, and thus the partial drive mold 14 can be moved in the pressing direction together with the piston 11.

In this case, as the pressure oil (hydraulic oil), high-temperature hydraulic oil that can be used at the molding temperature may be used.

### (Method for repeating partial molding)

As illustrated in FIGS. 3 and 9, the molding outer surface of the inner surface mold 10A and the outer surface mold 10B has the molding zone Za and the non-molding zone Zb. In addition, the non-molding zone Zb is divided into the preheating zone and the cooling zone.

In addition, during molding, the FRP material 2 in the molding zone Za is in a molten state, and the FRP material 2 (or FRP product 3) in the non-molding zone Zb has a low temperature portion and a transition portion.

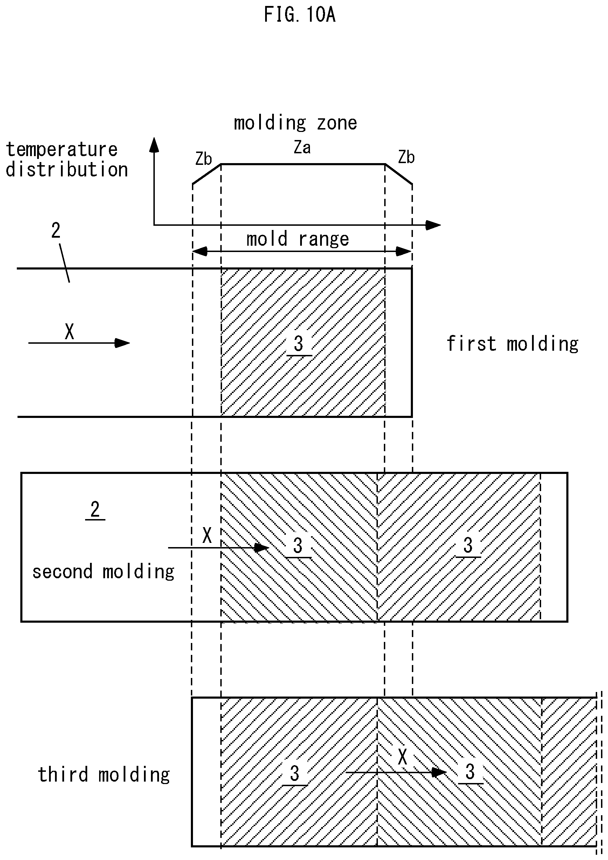

FIG. 10A is an explanatory view of the method for repeating partial molding.

In this drawing, the molding positions of the inner surface mold 10A and the outer surface mold 10B are fixed, and the FRP material 2 is moved from left to right in the X direction.

In first molding, the FRP material 2 is molded into the FRP product 3 in the molding zone Za (shaded part in the drawing).

In second molding, the molding is performed with the rear end (left end in the drawing) of the first molding positioned in the molding zone Za of the second molding.

With this configuration, the rear end portion of the first molding is molded by being re-heated after being molded into the FRP product 3, and thus the rear end portion of the first molding and the front end portion of the second molding can be molded into the FRP product 3 without a joint.

Third and subsequent molding operations are also the same as the second molding.

As described above, when the entire large FRP material 2 is molded into the FRP product 3 by repeating partial molding, the range that has been converted into FRP in the previous molding is included in the molding zone Za in the next molding.

The rear end portion of the first molding and the front end portion of the second molding may be positioned to be in contact with each other and subjected to molding.

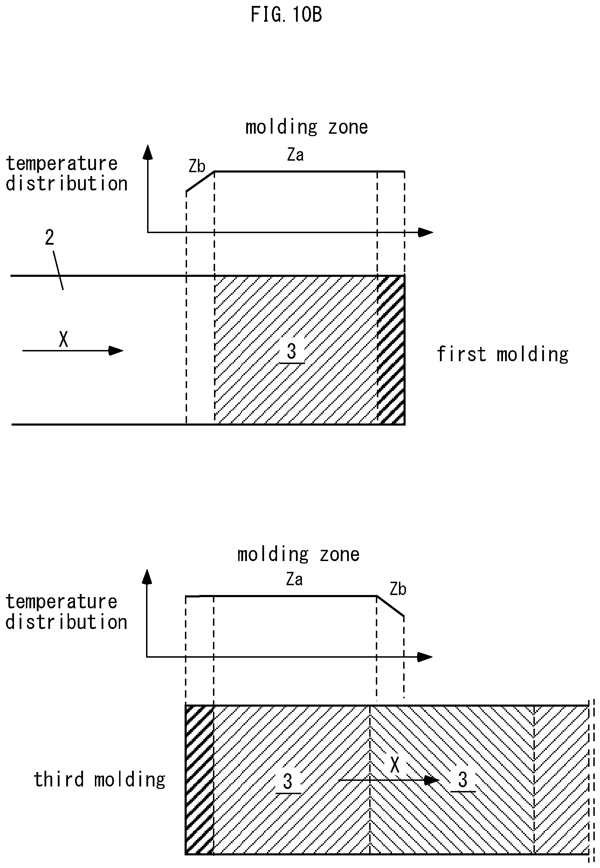

FIG. 10B is another explanatory view of the method for repeating partial molding.

As illustrated in this drawing, as a variation, the temperature may be raised for molding even in a place called the non-molding zone Zb of the mold. For example, it may be desirable to convert even the end portion of the FRP material into FRP.

### (FRP molding method)

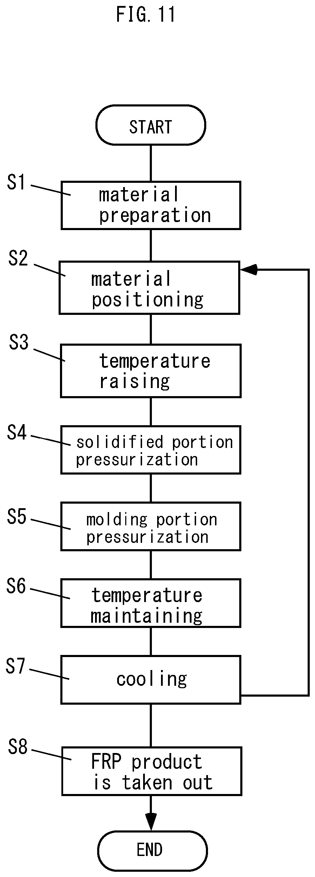

FIG. 11 is an overall flowchart of an FRP molding method according to the present invention.

An FRP molding method according to the present invention is a method for molding an FRP material 2 to manufacture an arc-shaped FRP product 3 having a radius of 1 m or more.

The FRP material 2 has a single layer of prepreg 1 or a plurality of laminated prepregs 1.

In this drawing, the FRP molding method has steps S1 to S8.

In a material preparation step S1, an FRP material 2 containing a thermoplastic resin is prepared. The FRP material 2 is a material that is obtained by laminating a plurality of prepregs 1 and becomes an FRP product 3 after molding.

In a material positioning step S2, the position of the FRP material 2 is determined with respect to the inner surface mold 10A or the outer surface mold 10B.

In first molding, first, the FRP material 2 to be molded is positioned between the inner surface mold 10A and the outer surface mold 10B, and the molded part of the FRP material 2 is gripped between the inner surface mold 10A and the outer surface mold 10B.

At this stage, no deforming force acts on the FRP material 2.

The same applies to second and subsequent positioning operations.

A step of setting mandrels and the stringers may be provided after the material positioning step S2.

In a temperature raising step S3, the temperature of the inner surface mold 10A or the outer surface mold 10B starts to be raised, the temperature of the mold body 12 is raised to a predetermined molding temperature by step S5, and the molding temperature is maintained.

In a solidified portion pressurization step S4, the solidified portion mold 14a is pressurized toward the FRP material 2 in the non-molding zone Zb and the pressure is maintained.

In this case, the mold body 12 of the inner surface mold 10A or the outer surface mold 10B may be kept stationary, the solidified portion mold 14a may be pressurized by the partial drive device 16, and the pressure may be maintained.

In a molding portion pressurization step S5, the mold body 12 and the thick portion mold 14b are pressurized toward the FRP material 2 in the molding zone Za and the pressure is maintained.

In this case, together with the solidified portion mold 14a, the pressure caused by the mold body 12 and the pressure caused by the thick portion mold 14b are independently controlled, and the pressures are maintained.

The pressure (molding pressure) during molding is, for example, 1 to 10 MPa.

The solidified portion pressurization step S4 and the molding portion pressurization step S5 may be performed simultaneously.

In addition, the step S5 may be performed simultaneously or earlier.

In a temperature maintaining step S6, the molding temperature is maintained for a predetermined time. The molding temperature maintaining time is, for example, 5 to 60 minutes.

In a cooling step S7, the mold is cooled by the cooling device. The cooling is performed by flowing cooling air into the mold, for example.

After the mold is cooled and the entire FRP product 3 is solidified, the mold is opened, and the process returns to the step S2.

The steps S2 to S7 are repeatedly executed until the entire FRP material 2 is converted into FRP to obtain the FRP product 3.

After the entire FRP material 2 is converted into FRP and becomes the FRP product 3, the mold is opened and the FRP product 3 is taken out in a step S8.

An FRP molding method using the partial pressing device 30 illustrated in FIG. 3 has a partial pressing step and a transport step, and the partial pressing step and the transport step are repeated.

The partial pressing step corresponds to the steps S3 to S7. That is, in the partial pressing step, a part of the FRP material 2 is heated under pressure using the FRP molding mold 10 to reduce the viscosity of the resin and impregnate the fibers with the resin, and conversion into FRP is achieved.

The transport step corresponds to the step S2, and the molded part of the FRP material 2 by the partial pressing step is intermittently moved.

By repeating the partial pressing step and the transport step, a large FRP product 3 can be produced.

According to the embodiment of the present invention described above, the FRP molding mold 10 has the partial drive device 16 capable of driving the partial drive mold 14 independently from the mold body 12, and the heating device 18 capable of heating the mold body 12.

With this configuration, even when the specific volume (for example, thickness) of the FRP material 2 or the FRP product 3 increases due to thermal expansion in the heating portion (for example, molding zone Za) by the heating device 18, the molding outer surface of the partial drive mold 14 can be driven independently from the mold body 12. Therefore, in the process of converting the FRP material 2 into FRP, it is possible to apply a sufficient pressure to the entire molding surface of the FRP material 2, to prevent or suppress the generation of internal defects, and to mold an FRP product having few internal defects.

In particular, by using the solidified portion mold 14a, it is possible to prevent the layer from meandering out of the plane and the micro-voids from expanding.

In addition, by using the thick portion mold 14b, it is possible to suppress or prevent the generation of internal defects in the thick portion.

In addition, according to the embodiment of the present invention, in the solidified portion pressurization step S4, the solidified portion mold 14a is pressurized toward the FRP material 2 in the non-molding zone Zb and the pressure is maintained. Next, in the subsequent molding portion pressurization step S5, together with the solidified portion mold 14a, the mold body 12 and the thick portion mold 14b are pressurized toward the FRP material 2 in the molding zone Za and the pressure is maintained.

Through this method, it is possible to prevent the occurrence of a phenomenon in which the FRP material 2 during molding is elongated from the center portion toward the end portion.

In addition, according to the embodiment of the present invention, the steps from the material positioning step S2 to the cooling step S7 are repeatedly executed until the entire FRP material 2 is converted into FRP to obtain the FRP product 3. Therefore, the arc-shaped FRP product 3 (for example, a large FRP product having a radius of 1 m or more) having the member 6 (for example, stringer) can be molded and manufactured by small molds.

In addition, according to the embodiment of the present invention, when the entire large FRP material 2 is molded into the FRP product 3 by repeating partial molding, the entire FRP material 2 can be molded into the FRP product 3 by bringing the range that has been converted into FRP in the previous molding into contact with the molding zone Za in the next molding. Furthermore, by including the range that has been converted into FRP in the previous molding in the molding zone Za in the next molding, the entire FRP material 2 can be molded into the FRP product 3.

In the above-described examples, the FRP product 3 has an arc shape, but the present invention can also be applied in the same manner to FRP products (for example, FRP products having a Z-shaped, L-shaped, or hat-shaped cross section) configured to have a planar surface shape stretched in a uniaxial direction, such as a stringer.

The present invention is not limited to the above-described embodiments, and it is needless to say that various modifications may be made without departing from the gist of the present invention.

### Description of Reference Numerals

D: outer diameter, F1: inner-surface arc surface, F2: inner-surface recessed groove, F3: outer-surface arc surface, G, G1, G2, G3: molding outer surface, L1: first distance, L2: second distance, P: pitch, X: moving direction of FRP material, Y: width direction, Za: molding zone, Zb: non-molding zone, 1: prepreg, 2: FRP material, 2a: thin portion, 2b: thick portion, 3: FRP product, 5: arc part, 6: member (stringer), 7a: upper surface portion, 7b: side surface portion, 7c: leg portion, 8: mandrel, 8a: upper surface, 8b: slope surface, 8c: bottom surface, 10: FRP molding mold, 10A: inner surface mold, 10B: outer surface mold, 11: piston, 12: mold body, 12a: cylindrical cavity, 12b, 12c: flow channel, 13: second pressing control device, 14: partial drive mold, 14a: solidified portion mold, 14b: thick portion mold, 15: partially fixed mold, 16: partial drive device, 16a: rod-shaped member, 16b: linear motion device, 16c: first pressing control device, 17a, 17b: direction-changing member, 18: heating device, 19: cooling device, 20: long member, 22: mounting portion, 23: leg portion, 23a: rear surface, 24: first claw portion, 25: narrow part, 26: recessed groove, 26a: bottom surface, 27: second claw portion, 28: wide part, 29: stepped hole, 29a: first recessed portion, 29b: second recessed portion, 29c: support claw, 30: partial pressing device, 31: bolster, 32: slide, 33: hydraulic ram, 34: press frame, 40: transport device, 42: gripping device, 44: moving device, 100: FRP molding system

## Claims

1. An FRP molding mold that converts an FRP material containing a resin into FRP by heating the FRP material under pressure, the FRP molding mold comprising:
an inner surface mold and an outer surface mold configured to grip the FRP material between the inner surface mold and the outer surface mold,
wherein the inner surface mold or the outer surface mold includes
a mold body,
a partial drive mold configured to be attached to the mold body and be movable in a pressing direction in which a pressure is applied to a molding surface of the FRP material,
a partial drive device configured to be capable of driving the partial drive mold independently from the mold body, and
a heating device configured to be capable of heating the mold body.

2. The FRP molding mold according to Claim 1,
wherein the partial drive device has a rod-shaped member configured to have one end fixed to the partial drive mold and extend in a direction opposite to the pressing direction,
a linear motion device configured to be fixed to the mold body and move the other end of the rod-shaped member in the pressing direction, and
a first pressing control device configured to control the linear motion device and adjust a pressure acting on the molding surface.

3. The FRP molding mold according to Claim 1,
wherein the partial drive device includes a piston configured to be fixed to the partial drive mold, be fitted to a cylindrical cavity provided in the mold body, and be movable in an axial direction of the cylindrical cavity, and
a second pressing control device configured to supply pressure oil to the cylindrical cavity via a flow channel provided in the mold body, move the piston in the pressing direction, and thus adjust the pressure acting on the molding surface.

4. The FRP molding mold according to Claim 1,
wherein the inner surface mold and the outer surface mold have a molding outer surface abutting on the molding surface of the FRP material, and
the molding outer surface has a molding zone that converts the FRP material of an abutting part into FRP, and a non-molding zone that is positioned adjacent to and outside the molding zone, and preheats or cools the FRP material.

5. The FRP molding mold according to Claim 4,
wherein the partial drive mold is a solidified portion mold positioned in the non-molding zone, and
a temperature of the molding outer surface of the solidified portion mold is maintained with a temperature gradient of -0°C to -300°C on a low temperature side and +0°C to +110°C on a high temperature side, relative to a melting point of the resin.

6. The FRP molding mold according to Claim 4,
wherein the FRP material has a thin portion having a relatively small thickness, and a thick portion having a larger thickness than the thin portion, and
the partial drive mold is a thick portion mold that is positioned in the molding zone and abuts on the thick portion.

7. The FRP molding mold according to Claim 4, further comprising:
a partially fixed mold configured to be detachably attached to the mold body of the molding zone,
wherein the partially fixed mold has a long member configured to have a constant width and extend in a length direction, and a mounting portion configured to be detachably attached by being fitted to the mold body.

8. The FRP molding mold according to Claim 7,
wherein the long member has the molding outer surface of the partially fixed mold,
the mounting portion has a single leg portion extending from the long member to a side opposite to the molding outer surface, and a plurality of first claw portions protruding from an end portion on the mold body side of the leg portion to both sides of the long member in a width direction,
the plurality of first claw portions are configured at a constant pitch in a length direction of the partially fixed mold, and a narrow part where no first claw portion is present is provided in middle of the pitch,
the mold body has a single recessed groove fitted to the mounting portion and accommodating the leg portion and the first claw portion, and a plurality of second claw portions fitted to gaps between the long member and the first claw portions,
the plurality of second claw portions are configured at the same pitch as the first claw portions in a width direction of the mold body, and a wide part where no second claw portion is present is provided in middle of the pitch, and
the wide part is set to be longer than the first claw portion.

9. The FRP molding mold according to Claim 2,
wherein the partial drive mold is configured detachably by being fitted to a lower end portion of the rod-shaped member.

10. The FRP molding mold according to Claim 9,
wherein the rod-shaped member has a small-diameter part having a diameter smaller than an outer diameter of the lower end portion between a first distance and a second distance from the one end,
the partial drive mold has, on a rear surface, a stepped hole to which the lower end portion of the rod-shaped member is detachably attached,
the stepped hole has a first recessed portion into which the lower end portion of the rod-shaped member can be inserted, and a second recessed portion having a support claw fitted to the small-diameter part, and
the first recessed portion and the second recessed portion are configured so that the partial drive mold is movable in a length direction of the partial drive mold with respect to the lower end portion of the rod-shaped member.

11. An FRP molding system comprising:
a partial pressing device configured to have a bolster and a slide fixing the FRP molding mold according to Claim 1, and intermittently compress a part of the FRP material to partially mold the FRP material; and
a transport device configured to intermittently move a compressed part of the FRP material by the partial pressing device.

12. An FRP molding method comprising:
gripping the FRP material between the inner surface mold and the outer surface mold of the FRP molding mold according to Claim 1;
pressurizing the FRP material by driving the mold body and the partial drive mold independently from each other; and
heating the FRP material under the pressure to convert the FRP material into FRP.

13. The FRP molding method according to Claim 12, further comprising:
a material positioning step of determining a position of the FRP material with respect to the inner surface mold or the outer surface mold;
a temperature raising step of raising a temperature of the mold body to a predetermined molding temperature and maintaining the temperature;
a solidified portion pressurization step of pressurizing a solidified portion mold toward the FRP material and maintaining the pressure;
a molding portion pressurization step of independently controlling pressures caused by the mold body and the partial drive mold, pressurizing the mold body and the partial drive mold toward the FRP material, and maintaining the pressure;
a temperature maintaining step of maintaining the molding temperature for a predetermined time; and
a cooling step of cooling the mold body.

14. The FRP molding method according to Claim 13, further comprising: a step of setting a mandrel and a stringer after the material positioning step.

15. The FRP molding method according to Claim 12,
wherein the resin is a thermoplastic resin,
a partial pressing step of heating a part of the FRP material under the pressure using the FRP molding mold to reduce a viscosity of the resin and impregnate fibers with the resin, and thus achieving conversion into FRP, and
a transport step of intermittently moving a molded part of the FRP material by the partial pressing step are provided, and
the partial pressing step and the transport step are repeated.

16. The FRP molding method according to Claim 15,
wherein the inner surface mold and the outer surface mold have a molding outer surface abutting on the molding surface of the FRP material, and
the molding outer surface has a molding zone that converts the FRP material of an abutting part into FRP, and a non-molding zone that is positioned adjacent to and outside the molding zone, and preheats or cools the FRP material.
